Europäisches Patentamt

European Patent Office

Office européen des brevets

(11) Publication number: **0 143 666**
**B1**

## (12) EUROPEAN PATENT SPECIFICATION

(45) Date of publication of patent specification: **03.05.89**

(21) Application number: **84308295.9**

(22) Date of filing: **29.11.84**

(51) Int. Cl.⁴: **H 01 M 10/34, H 01 M 4/76**

(54) Lead acid recombination cells.

(30) Priority: **29.11.83 GB 8331784**
**29.11.83 GB 8331785**

(43) Date of publication of application:
**05.06.85 Bulletin 85/23**

(45) Publication of the grant of the patent:
**03.05.89 Bulletin 89/18**

(84) Designated Contracting States:
**AT BE CH DE FR GB IT LI LU NL SE**

(56) References cited:
**WO-A-80/02474**
**DE-A-2 935 505**
**FR-A-2 370 368**
**US-A-1 409 895**

**PATENTS ABSTRACTS OF JAPAN, vol. 7, no.**
**94 (E-171)1239r, 20th April 1983; & JP - A - 58**
**18 875 (NIHON DENCHI K.K.) 03-02-1983**

The file contains technical information
submitted after the application was filed and
not included in this specification

(73) Proprietor: **CHLORIDE GROUP PUBLIC LIMITED**
**COMPANY**
**52 Grosvenor Gardens**
**London SW1W 0AU (GB)**

(72) Inventor: **Gibson, Ian Kenneth**
**18 Brentwood Road**
**Swinton Manchester (GB)**
Inventor: **Peters, Kenneth**
**Glen Bank Broad Oak Park**
**Worsley Lancashire (GB)**
Inventor: **Platt, Graham Clyde**
**25 Davenport Fold Road Harwood**
**Bolton Lancashire (GB)**

(74) Representative: **Jennings, Nigel Robin et al**
**KILBURN & STRODE 30 John Street**
**London WC1N 2DD (GB)**

(56) References cited:
**PATENTS ABSTRACTS OF JAPAN, vol. 7, no.**
**115 (E-176)1260r, 19th May 1983; & JP - A - 58**
**35 877 (YUASA DENCHI K.K.) 02-03-1983**

## Description

The present invention relates to lead acid recombination cells. Recombination cells are those in which gas evolved on charging is not vented to atmosphere but is induced to recombine within the cell. Such cells contain a reduced amount of electrolyte such that substantially all the electrolyte is absorbed in the electrodes and separators.

Recombination automotive batteries of lead acid type are known and one such battery is disclosed in British Patent No. 2062945 of the present applicants. Such batteries comprise a plurality of cells connected in series, each cell comprising a plurality of alternating, flat positive and negative plates, typically about 1.5 mm thick, interleaved with microfine fibre separator material, typically about 1.2 mm thick in its uncompressed state. When such a battery is assembled the separator material is compressed, typically to between 50 and 75% of its uncompressed thickness because a tight intimate contact between the entire area of the plates and the separator material is believed to be essential if the capillarity of the separator material is to be able effectively to maintain sufficient electrolyte in contact with the plates for their electrochemical requirements. The separator material also has a sufficient void space to permit oxygen to diffuse through it towards the negative plates but affords a relatively low resistance pathway between adjacent plates of opposite polarity.

Whilst the prior specification referred to above is primarily applicable to lead acid automotive batteries it might be thought that the technology would be applicable to any type of lead acid battery with substantially flat plates and it is indeed believed that, for instance, a flat plate lead acid recombination motive power cell or battery could be manufactured. A motive power cell is one which has a large ampere-hour capacity for motive power purposes and whilst it is electrochemically very similar to an automotive battery its physical construction is very different to cope with the large current that it delivers for extended periods and the repeated deep cycling, that is to say deep discharge followed by full recharge, to which it is subjected, usually on a daily basis.

However, conventional lead acid motive power cells are frequently of tubular type, that is to say it comprises flat negative plates alternating with so called tubular positive plates. Tubular plates are those plates in which the active material is not simply pasted onto a retaining grid of lead or lead alloy but is retained within a plurality of parallel interconnected tubes of porous material, e.g. a woven or non-woven fabric, along the axis of each of which a respective conductive spine extends. All the conductive spines are connected to a current collecting bar which is in turn connected to a current take-off lug by which, in use, the plate is connected to further such plates in the conventional manner.

An example of a cell having positive tubular plates is disclosed in DE-A-2935505, corresponding to GB-A-2,034,959.

In use, battery plates are subject to corrosive and mechanical forces and in general it is the effect of these forces which determines the service life of the battery. The magnitude of the forces depends on the manner in which the battery is used and is very much larger in those batteries which are regularly deeply discharged, e.g. motive power batteries. The forces referred to above act primarily on the positive plates of a battery and thus tubular lead acid motive power cells with negative plates of conventional type comprising a cast grid of lead or lead alloy bearing active material alternating with positive plates of tubular type are found to have an extended service life. The reason for this is that the tubes can expand as the active material within them expands and thus more positively retain the active material and prevent shedding of the active material and it is shed active material which can cause the ultimate failure of the battery by depleting the positive plate capacity and/or constituting a short circuit path between adjacent plates.

Recombination cells and batteries have considerable advantages over their conventional counterparts which are flooded with electrolyte, particularly as regards the elimination of the loss of electrolyte by gassing on recharge which avoids the necessity of repeated topping up of the electrolyte and reduces the possibility of an explosion occurring if the evolved gases should come into contact with a flame or spark. These advantages are of particular value in connection with motive power cells since such cells are very regularly deeply discharged and subsequently charged but for various reasons it has been believed that it is not possible to manufacture a lead acid recombination tubular cell.

Thus it has always been believed that to operate effectively the separator material of a recombination cell must be in contact with the entire active area of the plates with a contact pressure that is even over the entire area of the plates and that by virtue of the surface configuration of tubular plates which is inherently corrugated it would be impossible to ensure that the separator material contacts their entire surface area or that even if such contact were achieved the contact pressure would inherently vary considerably over the area of the plates. It was believed that such variation of contact pressure would result in certain areas of the positive plates being provided with either insufficient electrolyte for their electrochemical requirements or an amount of electrolyte in excess of that at which the recombination mechanism can operate effectively.

It might also be thought that the fabric defining the tubes accommodating the active material of the positive plates would impede the migration of oxygen to the positive active material and thus impede the recombination mechanism.

Due to the differing charging and discharging regimes to which automotive batteries and motive power cells are subjected the plates in the latter are very much thicker than those in the former and thus have a smaller ratio of the surface area of the plates to the total volume of active material. It was believed that this reduced ratio coupled with the high rate at which gas is produced when recharging a motive power cell would result in the recombination mechanism operating at a rate substantially less than that of the gas evolution in a recombination motive power cell or alternatively that such a cell would have to be charged at an unacceptably low rate at top of charge.

Finally, the lead alloy in lead acid batteries commonly includes a proportion of antimony, primarily to improve the mechanical handling characteristics of the plates. The presence of antimony is of very much greater importance in motive power cells since it enhances the castability of the lead alloy and thus enables the relatively long and slender conductive spines to be cast without problem and it increases the cycle life which is of considerable importance in a cell which is regularly deeply cycled. However, antimony depresses the hydrogen overpotential at the negative plates and increases the rate at which gas is evolved and it has been conventionally believed both in the industry and in the patent literature (e.g. British Patent No. 1364283) that no such impurity may be present in a recombination cell. Although it has in recent years been suggested that a lead acid recombination cell may in fact be able to tolerate a low content of antimony it has been believed that it would not be possible for such a cell to include the proportion of antimony which it is conventional and desirable to provide in a tubular plate motive power cell.

According to the present invention a lead acid recombination motive power cell of the type including a container which is closed by a lid and contains negative plates alternating with positive plates, adjacent plates being separated by compressable microfine glass fibre separator material in intimate contact with the plates, the cell containing a liquid electrolyte substantially all of which is absorbed in the plates and separator material, whereby there is substantially no free unabsorbed electrolyte, is characterised in that the positive plates are of the type comprising a plurality of parallel tubes of porous material which contain active material and along the interior of each of which a conductive spine extends.

The height of the positive plates may be in excess of 30 cm and the conductive spines may be made of lead alloy containing 2% or more by weight antimony. Adjacent pairs of plates are preferably separated by sheets of separator material which has been compressed and whose uncompressed thickness is in excess of 2 or 3 mm.

Thus expressed in its simplest form, the present invention resides in the provision of a lead acid recombination tubular plate cell and is based on the recognition that the various expected disadvantages and reasons why such a cell should not operate effectively referred to above do not arise or are incorrect.

The separator material is preferably a microfine glass fibre material of the type disclosed in the prior specification referred to above and is pressed into contact with the plates. The contact pressure is either not uneven or any unevenness of the contact pressure is found not to have the expected deleterious effects. It is also found that the fabric defining the tubes of the positive plates does not impede the migration of oxygen to the positive active material and indeed that the presence of this fabric has a positive beneficial effect in that it impedes the migration of antimony to the negative plates and thus permits the lead alloy of the positive plates to have an antimony content higher than expected without adversely affecting the performance of the cell. The separator material is found to remain adequately wetted with electrolyte, even in those areas which are more than 28 cm high and stratification of the electrolyte is found not to present a significant problem. It is found to be desirable that the separator material is between two and three times as thick as that between the plates of a recombination automotive battery because the plates of such a cell tend to be thicker and thus to carry more active material per unit area than the plates of an automotive battery.

Tubular plates are conventionally of elongate rectangular shape with the tube extending vertically and closed at their upper end by a current collecting bar and at their lower end by a so-called bottom bar which comprises a plurality of bungs connected in a line. Motive power cells tend to be very high in relation to their widths and thus tubular plates for such cells may be as much as 1 mm high but only about 14 cm wide. The extreme length of such plates produces problems in their manufacture firstly due to the substantial length of the individual tubes which results in difficulty in the filling of these tubes with active material and secondly because the concomitant substantial length of the conductive spines within the tubes renders them difficult to cast and difficult to handle after casting. The conductive spines and the current collecting bar are generally integrally pressure die cast and the lead or lead alloy must thus flow the full length of the narrow die cavities which correspond to the spines. The casting properties of lead alloys are improved by the addition of antimony and depending on the height of the plate to be produced it is customary for the lead alloy to contain up to 12% antimony. However, antimony is not only expensive as compared to lead but also promotes gassing when the battery is charged. In addition, the length of the tubes and conductive spines means that the conductive paths within the plate are relatively long and thus that a battery incorporating such tubular plates has a relatively high internal resistance.

It is therefore a further object of the present invention to provide a tubular plate for a lead acid electric storage battery in which these disadvantages are minimised.

In a preferred embodiment of the present invention the tubes of the positive plates extend generally parallel to the lid, all the conductive spines of each positive plate being connected to a current collecting bar extending along one side of that plate. Each positive plate may include a current take-off lug connected to one end of the current conducting bar.

In other words and expressed in simple terms, this aspect of the invention might be thought of as providing a recombination lead acid tubular plate cell in which the tubes of the positive plates extend horizontally rather than vertically. Although superficially a small change, this change in orientation of the tubes produces a number of substantial advantages. In view of the fact that tubular plates are generally higher than they are wide, it will be appreciated that the positive plates of a cell in accordance with this aspect of the invention will tend to have a larger number of tubes than would conventional tubular plates of the same size but that each of these tubes will be shorter. This considerably facilitates filling the individual tubes with active material and also results in the positive plates having a reduced resistance since, in use, the current flows predominantly horizontally towards the current collecting bar rather than vertically as previously. In addition, the conductive spines tend to be substantially shorter than would be the case in conventional tubular plates of the same size which considerably facilitates the casting of these spines and the associated current take-off bar and, in particular, enables them to be cast with a substantially reduced antimony content thereby reducing the raw material cost of the plate. It will be appreciated that the advantages obtained by this aspect of the invention increase as the height of the plates increases in relation to their breadth and the length of the positive plates is therefore preferably at least twice their breadth and may be three, four, five or even more times their breadth.

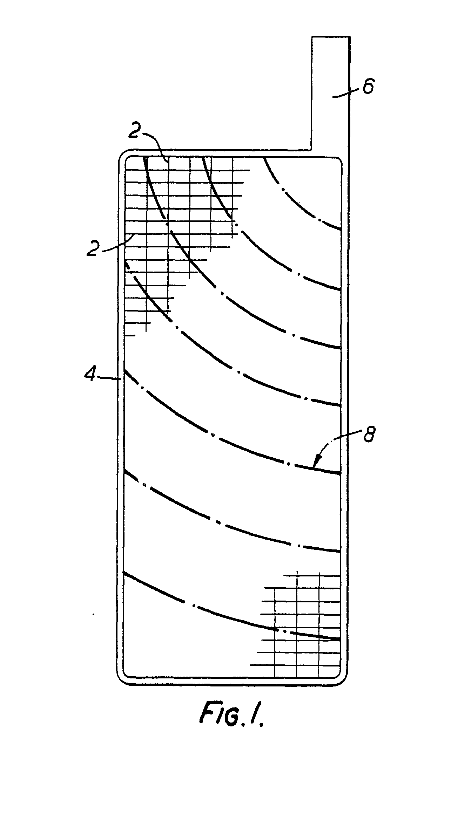

In a conventional tubular plate cell, the negative plates are generally of conventional type, that is to say they comprise a cast grid bearing active material. A typical conventional grid for a negative plate is shown in Figure 1 from which it will be seen that this grid comprises a plurality of mutually perpendicular grid elements 2 and is surrounded by a thickened peripheral frame 4, integral with one upper corner of which is an upstanding current take-off lug 6. In use, the flow of electric current through the plate, that is to say primarily through the grid elements 2 but also through the active material, is generally in the direction of the lug 6 though it will be appreciated that this current flow is somewhat distorted by the discontinuities constituted by the gaps defined by the grid elements 2. The lines designated 8 connect together points at which, in use, the potential is approximately the same at any given time and may thus be thought of as constituting isopotential "contours".

For reasons that are not fully understood it may be desirable that the current distributions in the positive and negative plates of a battery are generally similar, that is to say that the potential contours have approximately the same appearance in both the positive and negative plates.

In a conventional tubular plate in which the tubes and conductive spines extend vertically the current flow is substantially vertical with a small lateral component due to the fact that again the current flows generally towards the current take-off lug situated at one upper corner of the plate.

However, it will be appreciated that in the tubular plates of a cell according to the present invention the predominant direction of the current flow is horizontal, that is to say towards the vertically extending current collecting bars and the potential contours in such plates will therefore be substantially more vertically orientated than those shown in Figure 1. The battery industry is increasingly turning to the use of plates including expanded rather than cast grids and a battery incorporating tubular positive plates in accordance with the present invention may have negative plates including an expanded grid. The expanded mesh is preferably of substantially diamond shape with the major axes of the diamonds extending in the direction of the length of the negative plates. This orientation of the mesh elements minimises the current paths within the negative plates and it is preferred also that each negative plate includes a current collecting bar extending substantially along its length, preferably along one side of it. In such a negative plate the current flow will have a greater horizontal component than in a plate of the type illustrated in Figure 1 and the potential contours may therefore have an appearance very much more similar to that of a tubular plate with horizontal tubes.

One known method of making expanded metal battery plates is progressively to expand a strip of lead or lead alloy inwardly from its edges leaving a central unexpanded land and then to cut up the strip, generally after the application of active material to the expanded area, in such a manner that each plate is provided with a current take-off lug constituted by a portion of the unexpanded land. In a preferred form of the invention the grids of the negative plates are made by such a method and the central land is severed so as to terminate short of the bottom of each plate but extending above the top of it where it constitutes a current take-off lug. Such plates are disclosed in British Patent Specification No, 2119159 of the present applicants and it is preferred in the negative plates of the cell according to the present invention that the central land is cut along its central line thereby forming plates with an integral current take-off bar extending along one side and terminating short of the bottom of the expanded area but extending above the expanded area. It will be appreciated that in this manner the negative plates may be made from an expanded strip of lead alloy in a manner in which no lead alloy whatever is wasted or need be thrown away.

Further features and details of the present invention will be apparent from the following description of one specific embodiment which is given by way of example only with reference to Figures 2 to 4 of the accompanying drawings, in which:-

Figure 2 is a simplified diagrammatic view of a tubular positive plate for a cell in accordance with the present invention;

Figure 3 is a diagrammatic view of an expanded grid for a negative plate for a cell in accordance with the present invention;

Figure 4 is a cut-away, partially exploded perspective view of a cell in accordance with the invention; and

Figure 5 is a view similar to Figure 4 of an alternative construction of cell in accordance with the present invention.

Referring firstly to Figure 2, the positive plates comprise a plurality of horizontal interconnected tubes 12 (of which only one is shown in detail) which are made in the conventional manner by forming a plurality of rows of stitches in two sheets of fabric made from e.g. multifilament polyester yarn. Each tube 12 contains conventional positive active material 14 and extending axially within each tube and along its full length is a conductive spine 16 of lead alloy having a low antimony content of e.g. 2% by weight. All the conductive spines are integral at one end with a current collecting bar 18 which extends over the full height of the plate and projects up above it and there constitutes a current take-off lug 20. The cross-sectional area of the current collecting bar 18 decreases towards the bottom of the plate thereby ensuring that the current density in the bar 18 is substantially constant over its entire height. The ends of the tubes 12 remote from the bar 18 are closed by a tube end bar 22 which is of similar construction to the bottom bar used in conventional tubular plates and comprises an integral moulding of polypropylene or the like affording a plurality of spigots 24, each of which closes the end of a respective tube 12 and locates the respective conductive spine 16 against movement within its tube. The bottom of the current collecting bar 18 is provided with an integral foot 26 and the bottom of the tube end bar 22 is provided with a similar foot 28 so that the plate may sit reliably on the bottom of a battery container.

The tubular plate illustrated in Figure 2 may be manufactured by a method generally similar to that used for manufacturing a conventional tubular plate in which the tubes are vertical. Thus the current collecting bar 18 and the conductive spines are produced as an integral pressure die casting and the tubes are made in the conventional manner referred to above by stitching two layers of fabric together along a plurality of spaced parallel lines. The conductive spines are inserted into respective tubes and the tubes are then filled with active material. Finally, the open ends of the tubes are closed by means of the tube end bar 22.

The fact that the spines are shorter than would be the case in a conventional tubular plate of the same size means that the spines and current collecting bar may be cast more easily using a lead alloy with a lower than usual antimony content. The fact that the spines are horizontal means that in plates of differing capacity the length of the spines may be retained constant and merely their number altered. Furthermore, the reduced length of the tubes and thus the spines also means that, in use, each spine carries a reduced current which results in a reduction in corrosion and thus an increase in service life. This reduced length results in the increase in length of the spines which occurs in service being smaller, and thus the problem of accommodating this increase being reduced. In addition, the fact that the current collecting bar extends over the full height of the plate means that the current collection from the active material is more even over the area of the plate and enables the active material at the bottom of the plate to be more effectively utilised thus resulting in an increase in electrochemical efficiency. Finally, the reduced length of the tubes means that they may more easily be filled with active material and thus results in a reduction in the filling time.

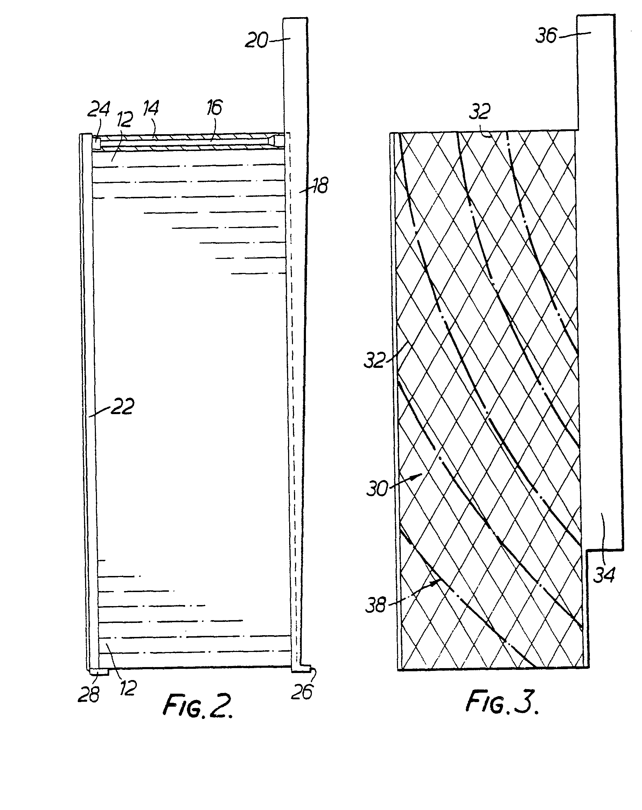

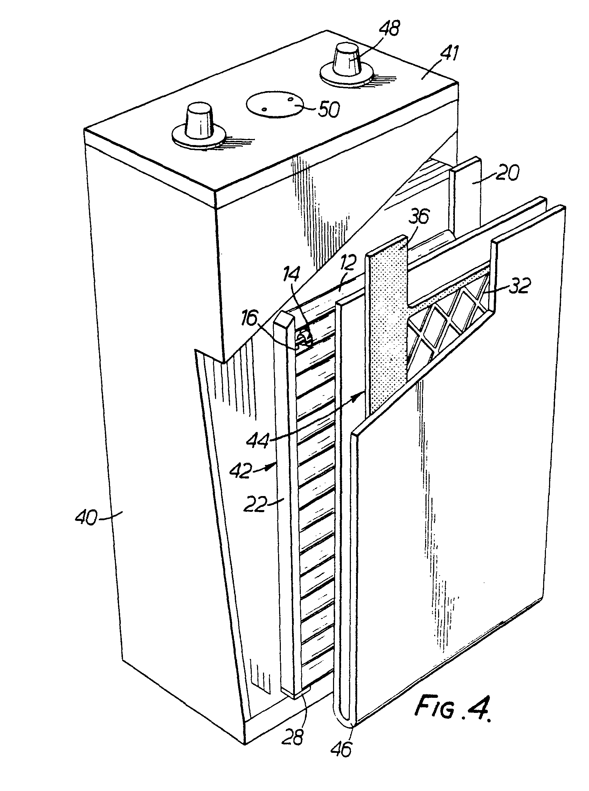

A lead acid cell incorporating plates as illustrated in Figure 2 will now be described with reference to Figure 4. The exemplary embodiment comprises a single lead acid motive power cell but it will be appreciated that the invention is equally applicable to a battery of cells. The cell includes an outer container 40 of polypropylene sealed by a lid 41 and containing a plurality of positive plates 42 of the type illustrated in Figure 2 interleaved with negative plates 44 of which there is one more than positive plates, and separated therefrom by microfine glass fibre separator material 46, a sheet of which is folded about each negative plate. Each negative plate comprises a lead alloy grid of the type shown in Figure 3 bearing active material (not shown for the sake of simplicity). The negative plate grid comprises a mesh 30 of expanded lead alloy which is constituted by mesh elements 32 arranged in a diamond configuration and integrally connected to one side of which is a current collecting bar 34 of unexpanded lead alloy. The current collecting bar 34 terminates short of the bottom of the negative plate by a predetermined distance and extends up above the top of the plate by the same distance where it constitutes a current take-off lug 36. The negative plate grids are conveniently produced by the method referred to above.

The current take-off lugs 20 and 36 of the positive and negative plates are connected by respective plate straps (not shown for the sake of simplicity) in the conventional manner which are in turn connected to terminals 48 which extend through the lid of the cell. The lid is also provided with a vent 50 adapted to vent the interior of the cell at e.g. 0.1 bar but to prevent the entry of air into the cell.

In use, the voltage distribution in the negative plates has the pattern indicated by the contours designated 38 in Figure 3. It will be seen that as a result of the provision of the side current collecting bar and the fact that the major axes of the diamonds defined by the mesh elements 32 extend vertically the potential contours 38 are generally more vertically disposed than the corresponding contours in a conventional plate as shown in Figure 1. Thus the current density contours of the negative plate shown in Figure 3 closely match those in the tubular positive plate illustrated in Figure 2.

The cell is of recombination type and thus contains substantially no free unabsorbed electrolyte whereby substantially all the electrolyte is absorbed in the plates and separators. In such a cell there is substantially no tendency for gas evolved to be trapped in the horizontal spaces defined by adjacent tubes since these spaces are filled by separator material which is retained in intimate contact with the surfaces of the tubular plates and since any such gas tends to move horizontally, i.e. any oxygen evolved tends to permeate towards the negative plates and be there recombined. In addition, the problem of stratification of the electrolyte, that is to say a progressive variation in the specific gravity of the electrolyte over the height of the battery, is minimised since the electrolyte is substantially immobile and its movement is further impeded by the regular "pinching" of the separator material which is effected by the horizontal tubes. The container differs from a conventional motive power cell container in that its base is provided with no mud ribs. Mud ribs are conventionally provided to accommodate shed active material which might otherwise ultimately constitute a short circuit path between adjacent plates but by virtue of the fact that the positive active material is retained in the fabric tubes and that all the plates and separators are tightly packed into the container to ensure that the separator material remains in intimate contact with the plates the possibility of active material being shed is almost wholly eliminated.

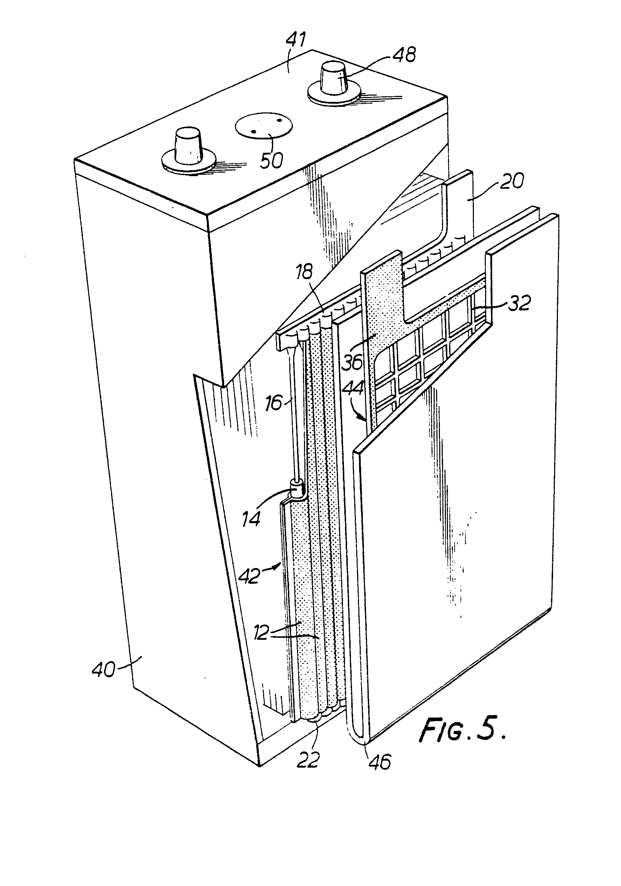

The modified construction of cell illustrated in Figure 5 is very similar to that of Figure 4 and the same reference numerals are used to illustrate similar components. The primary difference is that the tubes 12 of the positive plates 42 extend vertically rather than horizontally. This means that the tube end bars 22 extend along the bottom rather than the side of the positive plates whilst the current collecting bars 18 extend along the tops of these plates. In addition the grids of the negative plates are of cast rather than expanded form and the mesh elements 32 extend vertically and horizontally and thus intersect at right angles.

## Claims

1. A lead acid recombination motive power cell including a container which is closed by a lid and contains negative plates alternating with positive plates, adjacent plates being separated by compressible microfine glass fibre separator material in intimate contact with the plates and the cell containing a liquid electrolyte substantially all of which is absorbed in the plates and separator material, whereby there is substantially no free unabsorbed electrolyte, characterised in that the positive plates (42) are of the type comprising a plurality of parallel tubes (12) of porous material which contain active material (14) and along the interior of each of which a conductive spine (16) extends.

2. A cell as claimed in Claim 1, characterised in that the height of the positive plates (42) is in excess of 30 cm.

3. A cell as claimed in Claim 1 or Claim 2, characterised in that adjacent pairs of plates (42, 44) are separated by sheets of separator material (46) which has been compressed and whose uncompressed thickness is in excess of 2 mm.

4. A cell as claimed in any one of the preceding claims, characterised in that the tubes (12) of the positive plates extend generally parallel to the lid (41), all the conductive spines (16) of each positive plate being connected to a current collecting bar (18) extending along one side of the plate.

5. A cell as claimed in Claim 4, characterised by a current take-off lug (20) connected to one end of each current conducting bar (18), which current collecting bar is of progressively increasing cross-sectional area towards the lug (20).

6. A cell as claimed in any one of the preceding claims, characterised in that the length of the positive plates (42) transverse to the length of the tubes (12) is at least twice its breadth parallel to the length of the tubes (12).

7. A cell as claimed in Claim 4 or Claim 5, characterised in that the negative plates (44) include an expanded mesh (30) of lead or lead alloy.

8. A cell as claimed in Claim 7, characterised in that the mesh (30) is of substantially diamond shape with the major axes of the diamonds extending transverse to the length of the tubes (12) of the positive plates.

9. A cell as claimed in Claim 7 or Claim 8, characterised in that each negative plate (44) includes a current collecting bar (34) extending along one side of it.

10. A cell as claimed in Claim 9, characterised in that the current collecting bars (34) of the negative plates (44) terminate short of the bottom of the negative plates but extend up above the top of these plates and there constitute a respective current take-off lug (36).

## Patentansprüche

1.     Blei-Säure-Rekombinations-Antriebskraftzelle mit einem Behälter, der durch einen Deckel verschlossen ist und negative Platten, die sich mit positiven Platten abwechseln, enthält, wobei benachbarte Platten durch kompressibles mikrofeines Glasfaser-Separatormaterial getrennt sind, das sich in inniger Berührung mit den Platten befindet, und die Zelle einen flüssigen Elektrolyten enthält, der im wesentlichen ganz in den Platten und dem Separatormaterial absorbiert ist, so daß im wesentlichen kein freier unabsorbierter Elektrolyt vorhanden ist, dadurch gekennzeichnet, daß die positiven Platten (42) einem Typ angehören, der eine Mehrzahl von parallelen Röhren (12) aus porösem Material aufweist, die aktives Material (14) enthalten und längs deren Innerem sich jeweils ein leitfähiger Dorn (16) erstreckt.

2. Zelle nach Anspruch 1, dadurch gekennzeichnet, daß die Höhe der positiven Platten (42) größer als 30 cm ist.

3. Zelle nach Anspruch 1 oder Anspruch 2, dadurch gekennzeichnet, daß benachbarte Paare von Platten (42, 44) durch Blätter aus Separatormaterial (46) getrennt sind das zusammengepreßt wurde und dessen Dicke im nicht zusammengepreßten Zustand mehr als 2 mm beträgt.

4. Zelle nach einem der vorhergehenden Ansprüche, dadurch gekennzeichnet, daß die Röhren (12) der positiven Platten im wesentlichen parallel zum Deckel (41) verlaufen und daß alle leitfähigen Dorne (16) jeder positiven Platte an eine Stromsammelschiene (18) angeschlossen sind, die längs der einen Seite der Platte verläuft.

5. Zelle nach Anspruch 4, dadurch gekennzeichnet, daß mit dem einen Ende jeder stromleitenden Schiene ein Stromabnahmeansatz (20) verbunden ist und daß die Querschnittsfläche der Stromsammelschiene zum Ansatz (20) hin progressiv zunimmt.

6. Zelle nach einem der vorhergehenden Ansprüche, dadurch gekennzeichnet, daß die Länge der positiven Platten (42) quer zur Länge der Röhren (12) mindestens das Doppelte ihrer Breite parallel zur Länge der Röhren (12) beträgt.

7. Zelle nach Anspruch 4 oder Anspruch 5, dadurch gekennzeichnet, daß die negativen Platten (44) ein expandiertes Gitter (30) aus Blei oder Bleilegierung enthalten.

8. Zelle nach Anspruch 7, dadurch gekennzeichnet, daß das Gitter (30) im wesentlichen rautenförmig ist, wobei die großen Achsen der Rauten quer zur Länge der Röhren (12) der positiven Platten verlaufen.

9. Zelle nach Anspruch 7 oder Anspruch 8, dadurch gekennzeichnet, daß jede negative Platte (44) eine Stromsammelschiene (34) enthält, die längs ihrer einen Seite verläuft.

10. Zelle nach Anspruch 9, dadurch gekennzeichnet, daß die Stromsammelschienen (34) der negativen Platten (44) kurz vor dem Boden der negativen Platten enden, sich jedoch über das obere Ende dieser Platten hinaus erstrecken und dort einen entsprechenden Stromabnahmeansatz (36) bilden.

## Revendications

1.- Une cellule de puissance à recombinaison plomb-acide comportant une enveloppe fermée par un couvercle et une série alternée de plaques négatives et de plaques positives, qui sont séparées l'une de l'autre par un matériau séparateur compressible ultra fin en fibre de verre qui est en contact étroit avec elles, la cellule contenant un électrolyte liquide absorbé sensiblement entièrement dans les plaques et dans le matériau séparateur de façon à ce qu'il n'y ait pratiquement pas d'électrolyte libre non absorbé, caractérisée en ce que les plaques positives (42) sont du type comportant une pluralité de tubes parallèles (12) en matériau poreux qui contient un matériau actif (14) et en ce qu'à l'intérieur de chacun des tubes est disposée longitudinalement une barrette (16) conductrice.

2.- Une cellule selon la revendication 1, caractérisée en ce que la hauteur des plaques positives (42) dépasse 30 cm.

3.- Une cellule selon la revendication 1 ou la revendication 2, caractérisée en ce que les paires de plaques adjacentes (42, 44) sont séparées par des feuilles de matériau séparateur (46) qui a été comprimé et dont l'épaisseur à l'état non comprimé dépasse 2 mm.

4.- Une cellule selon l'une quelconque des revendications précédentes, caractérisée en ce que les tubes (12) des plaques positives ont une orientation générale parallèle au couvercle (41), toutes les barrettes conductrices (16) de chaque plaque positive étant reliée à une barre (18) collectrice du courant qui s'étend le long d'un côté de la plaque.

5.- Une cellule selon la revendication 4, caractérisée par une queue (20) de prise de courant reliée à une extrémité de chaque barre collectrice de courant (18) dont la section transversale augmente graduellement en direction de la queue (20).

6.- Une cellule selon l'une quelconque des revendications précédentes, caractérisée en ce que la longueur des plaques positives (42) transversalement à la longueur des tubes (12) est au moins le double de sa largeur parallèlement à la longueur des tubes (12).

7.- Une cellule selon la revendication 4 ou la revendication 5, caractérisée en ce que les plaques négatives (44) comportent une grille déployée (30) en plomb ou en alliage de plomb.

8.- Une cellule selon la revendication 7, caractérisée en ce que la grille (30) présente une forme sensiblement en losange, les grands axes des losanges s'étendant transversalement à la longueur des tubes (12) des plaques positives.

9.- Une cellule selon la revendication 7 ou la revendication 8, caractérisée en ce que chaque plaque négative (44) comporte une barre collectrice de courant (34) qui s'étend le long d'un côté de la plaque.

10.- Une cellule selon la revendication 9, caractérisée en ce que les barres collectrices de courant (34) des plaques négatives (44) se terminent un peu avant les bas des plaques négatives tandis qu'elles s'étendent au-dessus de ces plaques où elles constituent une queue respective (36) de prise de courant.

FIG. 1.

FIG.2.

FIG.3.

FIG.4.

FIG.5.